# EUROPEAN PATENT SPECIFICATION

(11) **EP 3 816 693 B1**
(45) Date of publication and mention of the grant of the patent: **13.12.2023**
(21) Application number: 19815753.9
(22) Date of filing: 21.05.2019
(51) Int. Cl.: G02B 13/00, G02B 13/18, G02B 7/02, H04M 1/02, G03B 17/14, H04N 23/55, H04N 23/57

(54) **LENS MODULE, PHOTOGRAPHING MODULE AND TERMINAL DEVICE**
LINSENMODUL, FOTOGRAFIERMODUL UND ENDGERÄT
MODULE D'OBJECTIF, MODULE DE PHOTOGRAPHIE ET DISPOSITIF TERMINAL

(30) Priority: 06.06.2018 CN 201810577545
(43) Date of publication of application: 05.05.2021
(73) Proprietor: Huawei Technologies Co., Ltd., Shenzhen, Guangdong 518129 (CN)
(72) Inventor: LI, Can, Shenzhen, Guangdong 518129 (CN); KUO, Li-Te, Shenzhen, Guangdong 518129 (CN)
(74) Representative: Grünecker Patent- und Rechtsanwälte PartG mbB
(86) International application number: PCT/CN2019/087784
(87) International publication number: WO 2019/233276

(56) References cited:
- WO-A1-2010/122841
- CN-A- 1 475 828
- CN-A- 104 656 231
- CN-U- 204 359 994
- CN-U- 207 460 318
- JP-A- 2007 134 811
- US-A1- 2016 154 198
- US-A1- 2017 160 511
- US-A1- 2017 353 634
- US-A1- 2018 054 607

## Description

### TECHNICAL FIELD

This application relates to the field of optical imaging technologies, and in particular, to the field of optical lens technologies.

### BACKGROUND

A consumer electronic product such as a terminal device, for example, a smartphone or a smart tablet usually has a photographing function. A front-facing camera of the terminal device is usually disposed on a frame part of a screen, and a position that blocks the camera on the screen cannot be used for display. Currently, customers increasingly expect that an area that can be used for display on the screen of the terminal device becomes increasingly large. How to make an area that can be used for display on a screen of a terminal device become increasingly large is a current exploration direction in the industry.
US patent application No. US20170160511A1 discloses a lens assembly including a lens that includes an effective region that refracts light, a flange region formed on at least a part around the effective region, and a first cut formed on a first sub region of the flange region, a spacer that includes a second cut formed to correspond to the first cut, and a barrel configured to receive the lens and the spacer, in which the lens and the spacer are disposed inside the barrel such that the first cut and the second cut correspond to a third cut formed on an outer circumferential surface of the barrel.
US patent application No.US20160154198A1 discloses various camera modules that include a lens, a lens stack (i.e., vertically stacked lenses) and/or an array of lenses. In some implementations, although the optically active part of each lens is rotationally symmetric, one or more of the lenses can have a non-circular shape, which in some cases can provide greater flexibility in the dimensions of the module and can result in a very small camera module. The lenses can be made, for example, by injection molding, which allows the lenses to be made in a wide range of shapes depending on the particular design requirements of the module. The lenses also can be made by a wafer-level replication technique. For example, the lenses can be replicated in a circular shape and then cut (e.g., by dicing) to match the dimensions of the active array area. In some implementations, a non-circular lens can be combined with circular lenses in a lens stack.
US patent application US20170353634A1 discloses a camera module includes: a first lens assembly; a second lens assembly disposed to be adjacent to the first lens assembly; a lens cover accommodating the first and second lens assemblies and having first and second through holes allowing light to be incident to the first and second lens assemblies; an actuator provided on one side of the first and second lens assemblies to drive the first and second lens assemblies; one image sensor disposed below the first and second lens assemblies and converting light signals incident through the first and second lens assemblies into first and second image signals; and a camera case having a through hole formed on a front side thereof and accommodating the lens cover to allow light to be incident to the first and second lens assemblies through the through hole, wherein portions of mutually adjacent regions of the first and second lens assemblies are cut so that the first lens assembly has a first cut surface and the second lens assembly has a second cut surface, and the first and second cut surfaces are in contact with each other or spaced apart from each other at a predetermined interval and disposed to face each other.

### SUMMARY

Embodiments of this application provide a lens module, a photographing module, and a terminal device. The lens module and the photographing module are disposed in an asymmetric structure, so that a distance from an optical axis of the photographing module to a frame of the terminal device is relatively small, thereby reducing a width of a non-display area, and expanding an area that can be used for display on a screen.
The invention and its scope of protection are defined in the appended claims.
In an aspect, there is provided a photographing module as defined in appended claim 1.
In an aspect, there is provided a terminal device as defined in appended claim 11.

According to a first aspect, an embodiment of this application provides a lens module. The lens module includes one or more first lenses arranged along an optical axis of the lens module, and one or more second lenses arranged along the optical axis, and a radial size of the second lens is larger than a radial size of the first lens. A circumferential surface of the second lens with a larger radial size is formed through enclosing by one or more sections of cylindrical surface and a connection surface connected to the cylindrical surface. Compared with setting the circumferential surface to a complete cylindrical surface, a part of an area is cut off in a radial direction of the second lens, so that a vertical distance from an optical axis of the second lens to the connection surface decreases.

In an implementation, the lens module includes one or more first lenses arranged along an optical axis of the lens module, and one or more second lenses arranged along the optical axis of the lens module. The first lens is located between a to-be-imaged object and the second lens, and a radial size of the second lens is larger than a radial size of the first lens. An outer surface of the second lens includes a light inlet surface, a light outlet surface, and a circumferential surface for connecting the light inlet surface and the light outlet surface, the circumferential surface of the second lens includes one or more sections of cylindrical surface and one or more connection surfaces, and the connection surface is connected to the cylindrical surface. The connection surface is a plane, the one or more sections of cylindrical surface are a lateral surface of a cylinder or a lateral surface of a conical frustum that uses the optical axis as a central axis, and the one or more connection surfaces are parallel to the optical axis. A vertical distance from the optical axis to any one of the connection surfaces is less than a minimum distance from the optical axis of the lens module to the cylindrical surface and is greater than or equal to a radius of the first lens. The cylindrical surface includes one or more corresponding areas, the corresponding areas are in a one-to-one correspondence with the connection surfaces, and one corresponding area and one corresponding connection surface are located on two opposite sides of the optical axis. The lens module and the photographing module are disposed in an asymmetric structure, so that a distance from an optical axis of the photographing module to a frame of a terminal device is relatively small, thereby reducing a width of a non-display area, and expanding an area that can be used for display on a screen.

Because the radial size of the second lens is larger than the radial size of the first lens, a radial size of the lens module mainly depends on the radial size of the second lens. The second lens is processed, so that the vertical distance from the optical axis to the connection surface is less than the distance from the optical axis to the cylindrical surface. Compared with a prior-art case in which distances from the optical axis to all positions on the circumferential surface of the second lens are the same, in this application, a size in a direction in which the second lens is perpendicular to the connection surface decreases, so that a radial size on a side that is of the optical axis of the lens module and that faces the connection surface decreases. Therefore, when the lens module is installed on the terminal device, a narrow bezel can be implemented.

In this embodiment of this application, the connection surface is formed by cutting the second lens. It may be understood that a quantity of corresponding areas and a quantity of connection surfaces are correspondingly set. When the second lens includes one connection surface, the second lens is cut in only one direction. In this case, there is also only one corresponding area. When the second lens includes two connection surfaces, the second lens is cut in two directions. In this case, there are also two corresponding areas, and the two corresponding areas and different connection surfaces are correspondingly disposed on the other side of the optical axis. The two corresponding areas may be different positions of a same section of cylindrical surface.

Specifically, the first lens is a concave lens or a convex lens that is rotationally symmetric and that uses the optical axis as a rotation axis, and the second lens is a concave lens or a convex lens that is not rotationally symmetric. Each lens of the lens module includes one or more concave lenses and one or more convex lenses.

In an embodiment of this application, there are a plurality of second lenses, each of the plurality of second lenses has one connection surface, and the plurality of connection surfaces of the plurality of second lenses are coplanar. In this embodiment, the plurality of second lenses are cut, and each second lens is cut to form one connection surface. All connection surfaces are coplanar, so that it is ensured that a radial size on a side that is of the optical axis of the lens module and that faces the connection surface is as small as possible.

In an embodiment of this application, there are a plurality of second lenses, each of the plurality of second lenses has a plurality of connection surfaces, and the plurality of connection surfaces of each second lens intersect, or extension surfaces of the plurality of connection surfaces of each second lens intersect. For example, each second lens has two connection surfaces, and the two connection surfaces intersect, or extension surfaces of the two connection surfaces intersect. Because a vertical distance from the optical axis to each of the two connection surfaces is less than a radius of the cylindrical surface, a radial size in a direction in which the second lens is perpendicular to each of the two connection surfaces decreases, and a radial size on a side that is of the optical axis of the lens module and that faces each of the two connection surfaces decreases. The lens module in this embodiment is applied to an intersection of two adjacent bezels of the terminal device, so that a narrow bezel can be implemented in each of two directions.

Specifically, the two connection surfaces of the second lens may intersect vertically. In this case, each second lens has one section of cylindrical surface, and two sides of the section of cylindrical surface are connected to the two connection surfaces. Alternatively, the two connection surfaces of the second lens are a first connection surface and a second connection surface, and the second lens has two sections of cylindrical surface, which are a first cylindrical surface and a second cylindrical surface. The first connection surface, the first cylindrical surface, the second connection surface, and the second cylindrical surface are sequentially connected, and jointly form the circumferential surface. In other words, the first cylindrical surface and the second cylindrical surface are alternated with the first connection surface and the second connection surface. The first connection surface and an extension surface of the second connection surface intersect vertically, and an intersection line between the first connection surface and the second connection surface is located on a side that is of the first cylindrical surface and that is away from the second cylindrical surface.

Specifically, direction positions of the plurality of connection surfaces of each second lens relative to the optical axis are different, and the connection surfaces that are of the plurality of connection surfaces of all the second lenses and that have a same direction position relative to the optical axis are coplanar. It may be understood that, in the plurality of second lenses, the connection surfaces located on a same side of the optical axis are coplanar. For example, each second lens has two connection surfaces, which are a first connection surface and a second connection surface. The first connection surface and the second connection surface intersect, or extension surfaces of the first connection surface and the second connection surface intersect. All the first connection surfaces are coplanar, and all the second connection surfaces are also coplanar.

In an implementation, there are P second lenses; each of M second lenses of the P second lenses has a plurality of connection surfaces including a first connection surface and a second connection surface; and each of N second lenses of the P second lenses has one connection surface, and the connection surface and the first connection surface are coplanar, where P = M + N, and P, M, and N are all positive integers. For example, there are two second lenses. One second lens has two connection surfaces, and the two connection surfaces are a first connection surface and a second connection surface. The other second lens has one connection surface that is coplanar with the first connection surface.

In another embodiment of this application, the first lens includes a light inlet surface, a light outlet surface, and a circumferential surface of the first lens for connecting the light inlet surface and the light outlet surface, the circumferential surface of the first lens is a lateral surface of a cylinder, an axis of the lateral surface of the cylinder is the optical axis, and the one or more connection surfaces of the one or more second lenses are tangent to the circumferential surface of the first lens.

The photographing module needs to have one or more first lenses, to ensure an appearance effect and a photographing effect of the photographing module. A distance from the connection surface of the second lens to the optical axis needs to be greater than or equal to a radius of the first lens closest to the object, to ensure a photographing effect. Therefore, when the connection surface of the second lens is tangent to the circumferential surface of the first lens, a size of the second lens is minimized, that is, a radial size on a side that is of the optical axis of the lens module and that faces the connection surface of the second lens is minimized.

A field of view of the lens module presents non-rotational symmetry by using the optical axis as a rotation center, and a field of view range of the lens module is from 70° to 100°, to ensure that the field of view range of the lens module in this application meets a use requirement.

According to a second aspect, this application provides a photographing module. The photographing module includes a lens tube and the foregoing lens module. The lens tube includes a first segment and a second segment that are connected to each other, the first lens of the lens tube is accommodated in the first segment, and the second lens of the lens tube is accommodated in the second segment. A tube wall of the first segment is a rotationally symmetric structure that uses an optical axis of the first lens as a rotation axis. A tube wall of the second segment includes one or more cylinder walls and one or more planar walls connected to the one or more cylinder walls, the cylindrical surface of the second lens is correspondingly disposed on an inner side of the cylinder wall, and the connection surface of the second lens is correspondingly disposed on an inner side of the planar wall.

In this application, the cylindrical surface of the second lens is correspondingly disposed on the inner side of the cylinder wall, and the connection surface of the second lens is correspondingly disposed on the inner side of the planar wall. Because a vertical distance from the optical axis to the connection surface of the second lens is less than a radius of the cylindrical surface of the second lens, when a lens assembly is assembled into the lens tube, a distance from the optical axis to the planar wall of the lens tube can be less than a distance from the optical axis to the cylinder wall of the lens tube. Compared with a prior-art case in which distances from the optical axis to all positions on the surface of the lens tube are the same, when the planar wall of the photographing module is disposed close to a frame of a terminal device, a distance from the optical axis to the frame of the terminal device decreases, so as to reduce a width of a non-display area of the terminal device.

In an embodiment of this application, the first segment of the lens tube is cylindrical, and a plane in which the one or more planar walls of the second segment are located is tangent to the tube wall of the first segment.

In another embodiment, there are at least two first lenses, and the first segment of the lens tube is of a step-shaped structure; and the first segment includes at least two blocks, each block is cylindrical, each first lens is accommodated in one block, and radial sizes of the blocks are in ascending order in a direction from the first segment to the second segment of the lens tube.

Specifically, the photographing module includes a sensing chip, and the sensing chip is accommodated in the lens tube and is located on an image side of the lens module, so that an object photographed by the lens module is imaged on the sensing chip. A geometric center of the sensing chip deviates from the optical axis. A direction in which the sensing chip deviates from the optical axis is a direction of a position of the corresponding area of the cylindrical surface of the second lens relative to the optical axis.

The sensing chip does not need to be further processed, so as to reduce a process and ensure normal implementation of a function of the sensing chip. To prevent the sensing chip from protruding excessively from the connection surface of the second lens, the second lens needs to be moved relative to the sensing chip, so that the geometric center of the sensing chip deviates from the optical axis.

According to a third aspect, this application provides a terminal device. The terminal device includes a display panel, a side frame, and a rear housing. The display panel is opposite to the rear housing, the side frame is connected between the display panel and the rear housing, and the display panel includes a display area and a non-display area located on an edge of the display area. The photographing module is disposed in the terminal device, the photographing module is a front-facing camera disposed between the non-display area and the side frame, and a planar wall of the lens tube is closer to the side frame than the cylinder wall.

A distance from the optical axis to the planar wall is less than a distance from the optical axis to the cambered wall in this application. Therefore, the planar wall of the lens tube is disposed closer to the side frame than the cylinder wall, so that a distance from the optical axis to the side frame of the terminal device is less than that in the prior art. Therefore, the distance from the optical axis to the side frame of the terminal device decreases compared with the prior art. In addition, a distance from the optical axis to the display area does not need to change. Therefore, a proportion of the display area of the screen of the terminal device may be increased while a narrow bezel is implemented in this application, thereby helping implement full-screen display of the terminal device.

### BRIEF DESCRIPTION OF DRAWINGS

To describe the structural features and functions of this application more clearly, the following describes the structural features and the functions in detail with reference to the accompanying drawings and specific embodiments.
FIG. 1 is a schematic diagram of a front facet of a terminal device according to this application;
FIG. 2 is a schematic sectional view of a terminal device in a II-II direction according to this application;
FIG. 3 is a schematic structural diagram of a photographing module according to an embodiment of this application;
FIG. 4 is a sectional view of the photographing module in FIG. 1 in a I-I direction;
FIG. 5 is a side view of a lens module in the photographing module in FIG. 1;
FIG. 6 is a schematic structural diagram of a second lens according to an embodiment of this application;
FIG. 7 is a schematic structural diagram of a second lens according to an embodiment of this application;
FIG. 8 is a schematic structural diagram of a second lens according to an embodiment of this application;
FIG. 9 is a side view of a lens module according to another embodiment of this application;
FIG. 10 is a side view of a lens module according to another embodiment of this application;
FIG. 11 is a side view of a lens module according to another embodiment of this application;
FIG. 12 is a schematic diagram of a field of view range of a lens module in the photographing module in FIG. 3;
FIG. 13 is a schematic structural diagram of a photographing module according to another embodiment of this application;
FIG. 14 is a side view of a lens module in the photographing module in FIG. 13;
FIG. 15 is a sectional view of a photographing module according to another embodiment of this application; and
FIG. 16 is a side view of the photographing module in FIG. 15.

### DESCRIPTION OF EMBODIMENTS

The following clearly and completely describes the technical solutions in the embodiments of this application with reference to the accompanying drawings in the embodiments of this application.

This application provides a photographing module, applied to a terminal device, to implement a photographing function of the terminal device. The terminal device is an electronic device that can be used for photographing and picture display, for example, a mobile phone, a tablet computer, or a notebook computer.

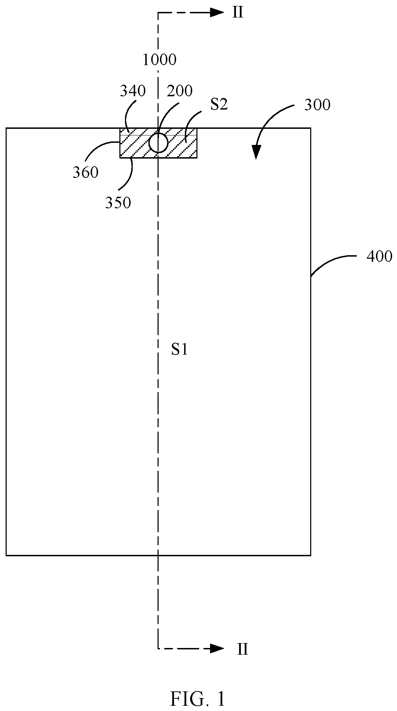

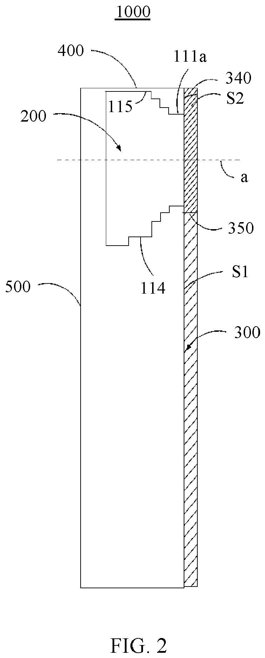

Referring to FIG. 1 and FIG. 2, a terminal device 1000 may be a mobile phone, and a photographing function of the terminal device 1000 is implemented by using a photographing module 200. The photographing module 200 may be used as a front-facing camera or a rear-facing camera of the terminal device 1000.

The terminal device 1000 includes a display panel 300, a side frame 400, and a rear housing 500. The side frame 400 is connected between the display panel 300 and the rear housing 500, and the display panel 300 includes a display area S1 and a non-display area S2 located on an edge of the display area S1. In an implementation, the photographing module 200 is a front-facing camera disposed between the non-display area S2 and the side frame 400. In the terminal device 1000 in this embodiment, the non-display area S2 is a "notch" structure of the terminal device 1000 and is rectangular, and includes an upper edge 340 close to the frame 400, a lower edge 350 opposite to the upper edge 340, and a side edge 360 connecting the upper edge 340 and the lower edge 350. In addition, both the lower edge 350 and the side edge 360 are boundaries between the non-display area S1 and the display S2. A small hole is disposed in the non-display area S2 of the terminal device 1000, the photographing module 200 is installed on an inner side of the small hole, and light enters the photographing module 200 after passing through the small hole.

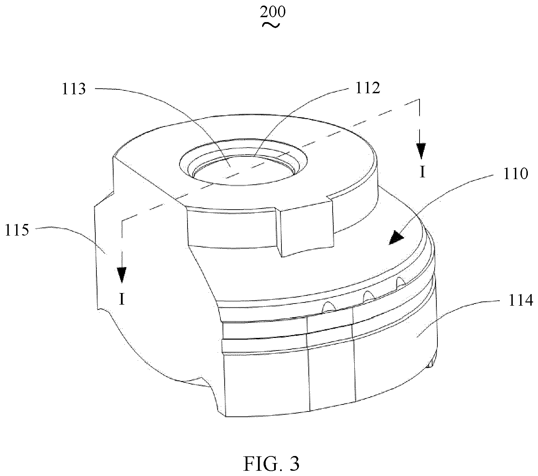

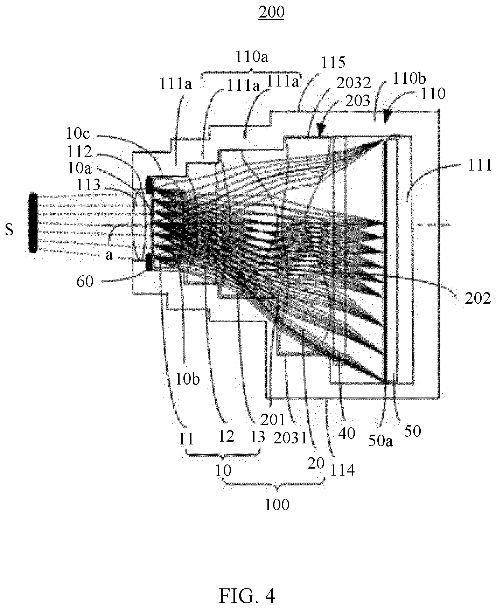

Referring to FIG. 3 to FIG. 5, the photographing module 200 includes a lens module 100 and a lens tube 110. The lens module 100 is accommodated in the lens tube 110, and is fastened to the terminal device by using the lens tube 110. As shown in FIG. 4, the lens module 100 performs imaging on an object S that is on one side of the lens module 100 on an imaging surface 50a that is on the other side of the lens module 100. The side on which the object S is located is an object side of the lens module 100. The side on which the imaging surface 50a is located is an image side of the lens module 100.

The lens module 100 includes one or more first lenses 10 and one or more second lenses 20 that are arranged from the object side to the image side along an optical axis a of the lens module 100, and the first lens 10 and the second lens 20 are disposed coaxially. Herein, "more" in "one or more" means two or more than two. The optical axis a of the lens module 100 and an optical axis of the first lens 10 are a same axis.

The first lens 10 is close to the side of the object S, and the second lens 20 is close to the side of the imaging surface 50a. When there are a plurality of first lenses 10, the plurality of first lenses 10 are sequentially arranged along the optical axis a in ascending order of radial size. In other words, a longer distance to the object S indicates a larger radial size of the first lens 10. When there are a plurality of second lenses 20, the plurality of second lenses 20 are sequentially arranged along the optical axis a in ascending order of radial size. In other words, a shorter distance to the imaging surface 50a indicates a larger radial size of the second lens 20. A radial size of the second lens 20 is larger than a radial size of the first lens 10, and a projection of the first lens 10 on the second lens 20 along a direction of the optical axis a is located within the second lens 20.

The radial size of the first lens 10 is smaller, and a field of view of the first lens 10 is not very dispersed. The radial size of the second lens 20 is larger, and the second lens 20 has a more dispersed field of view. The object S is imaged on the image side under a joint effect of the first lens 10 and the second lens 20. For each first lens 10 and each second lens 20, an object side surface is a light inlet surface, and an image side surface is a light outlet surface. The object side surface and the image side surface may be concave, convex, or planar, and light entering the first lens 10 and the second lens 30 is converged for imaging after being diverged. Because there are a concave lens and a convex lens in the first lens 10 and the second lens 20, imaging of the lens module may be implemented under a joint effect of the concave lens and the convex lens. Certainly, a shape design of each lens may be flexibly selected.

In an implementation, the first lens 10 is a convex lens or a concave lens that is symmetrically rotational and that uses the optical axis a as a rotation axis, so that an object located on the object side of the lens module 100 can be imaged by using the first lens 10, provided that the object is located within a specific range centered on the optical axis a. The second lens 20 may be a convex lens or a concave lens that is not symmetrically rotational. The convex lens includes a common convex lens and an abnormal convex lens, and the concave lens includes a common concave lens and an abnormal concave lens.

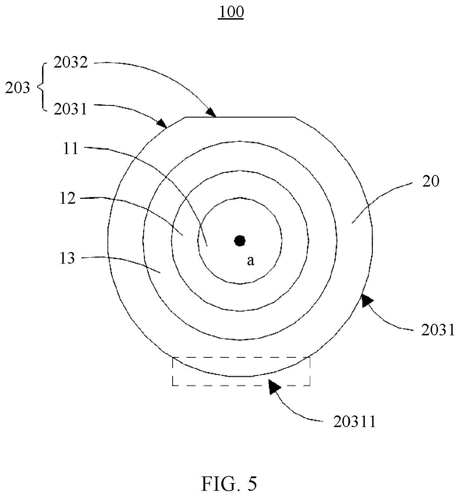

Specifically, the first lens 10 includes a light inlet surface 10a (that is, an object side surface facing the to-be-imaged object S), a light outlet surface 10b (that is, an image side surface facing the imaging surface 50a), and a circumferential surface 10c of the first lens for connecting the light inlet surface 10a and the light outlet surface 10b. The second lens 20 includes a light inlet surface 201, a light outlet surface 202, and a circumferential surface 203 for connecting the light inlet surface 201 and the light outlet surface 202 (as shown in FIG. 5). The circumferential surface 10c of the first lens is a lateral surface of a cylinder or a lateral surface of a conical frustum that uses the optical axis a as a central axis.

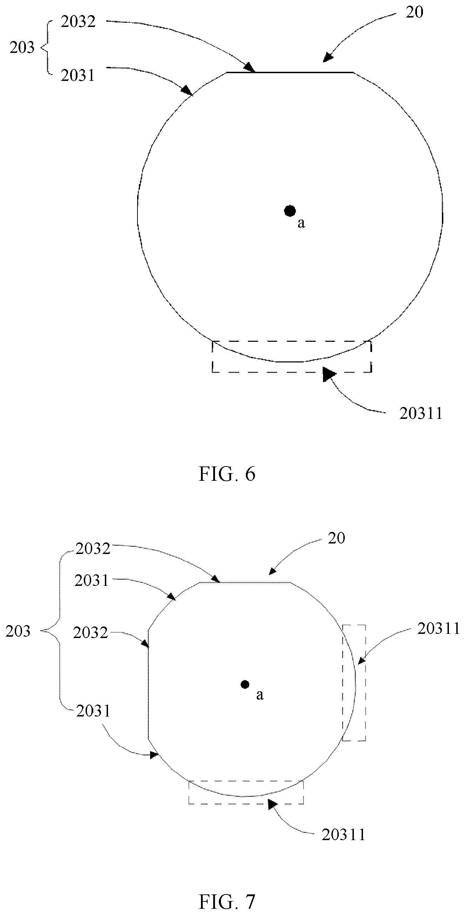

As shown in FIG. 5 to FIG. 8, the circumferential surface 203 of the second lens 20 includes one or more sections of cylindrical surface 2031 and one or more connection surfaces 2032 connected to the one or more sections of cylindrical surface 2031. A part of an area of the cylindrical surface 2031 is a corresponding area 20311, and the corresponding area 20311 and the connection surface 2032 are disposed on two opposite sides of the optical axis a. For example, in the embodiments shown in FIG. 5 and FIG. 6, the connection surface 2032 is located above the optical axis a, and the corresponding area 20311 is located below the optical axis a. The connection surface 2032 may be formed by cutting the second lens 20. It may be understood that a quantity of corresponding areas 20311 and a quantity of connection surfaces 2032 are correspondingly set. When the second lens 20 includes one connection surface 2032, the second lens is cut in only one direction. In this case, there is also only one corresponding area. When the second lens includes two connection surfaces, the second lens is cut in two directions. In this case, there are also two corresponding areas, and the two corresponding areas and different connection surfaces are correspondingly disposed on the other side of the optical axis. The two corresponding areas may be different positions of a same section of cylindrical surface.

When the cylindrical surface 2031 is a cambered surface, and the second lens 20 has one section of cylindrical surface 2031, the cylindrical surface 2031 is a lateral surface of a cylinder or a lateral surface of a conical frustum that uses the optical axis a as a central axis. When the second lens 20 has a plurality of sections of cylindrical surface 2031, the plurality of sections of cylindrical surface 2031 are a plurality of sections of lateral surface of a cylinder or a plurality of sections of lateral surface of a conical frustum that use the optical axis a as a central axis and have equal radii. In other words, a section of cylindrical surface is formed when an angle by which a straight line rotates around the optical axis a at a fixed distance is less than 360 degrees, and the straight line is parallel to the optical axis or an angle between the straight line and the optical axis is an acute angle.

The connection surface 2032 is a plane. The optical axis a is parallel to the connection surface 2032, and a vertical distance from the optical axis a to the connection surface 2032 is less than a minimum distance from the optical axis a to the cylindrical surface 2031 and is greater than or equal to a radius of the first lens 10. Because the second lens 20 is a lens with a relatively large radial size in the lens module 100, a minimum distance from the optical axis a to the connection surface 2032 of the second lens 20 affects a radial size on a side that is of the lens module 100 and that faces the connection surface 2032.

In the prior art, the second lens is a rotationally symmetric lens, and distances from the optical axis to all positions on the circumferential surface of the second lens are the same. Therefore, compared with the second lens in the prior art, in this embodiment of this application, a distance from the optical axis a to the connection surface 2032 is reduced by cutting the second lens. In this way, when the lens module 100 is installed on the terminal device 1000, the connection surface 2032 is closer to the frame of the terminal device, and a narrow bezel can be implemented.

Compared with a rotationally symmetric lens, although the connection surface 2032 is formed by cutting the lens, in an imaging process, a field of view of the lens module is dispersedly arranged on an image side of the second lens 20 and deviates towards a side on which the corresponding area 20311 is located. Correspondingly, a geometric center of a sensing chip that is correspondingly disposed on the image side of the second lens 20 also deviates towards a side on which the corresponding area 20311 is located. Imaging of the lens module is not affected, provided that the vertical distance from the connection surface 2032 to the optical axis a is greater than or equal to the radius of the first lens 10.

Because the connection surface 2032 is formed by cutting the second lens 20, a field of view range of the lens module decreases, but may be compensated by selecting a second lens 20 with a relatively large field of view range. For example, if a field of view range of 70° is required, a rotationally symmetric lens with a field of view range of 80° may be selected, the lens is cut to form the connection surface 2032, and a field of view of 10° is lost. In this way, the second lens 20 formed after the cutting still has the field of view of 70°.

Therefore, in this embodiment of this application, although a part of the field of view range is lost, a design parameter of the second lens 20 (for example, designed as a lens having a larger field of view range) may still be adjusted, so that the photographing module has a field of view range of 70° to 100°.

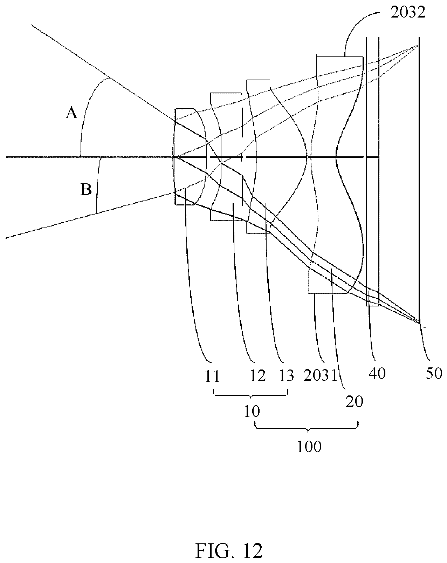

Specifically, referring to FIG. 12, after the connection surface 2032 is obtained by truncating a part of the second lens 20, a field of view B of the lens module 100 decreases. However, because a radius of the second lens 20 in this application is greater than a radius of a second lens of the lens module in the prior art, a field of view A of the lens module 100 increases, so as to ensure that an overall field of view of the lens module does not change greatly, and ensure an optical effect of the lens module. In specific embodiments of this application, a field of view of the lens module presents non-rotational symmetry by using the optical axis as a rotation center, and a field of view range of the lens module is from 70° to 100°, to meet an actual use requirement, and avoid affecting the field of view of the lens module 100 because a part of the second lens 20 is truncated.

A specific structure of the circumferential surface 203 is described by using one of the second lenses 20 as an example, and details are described as follows:

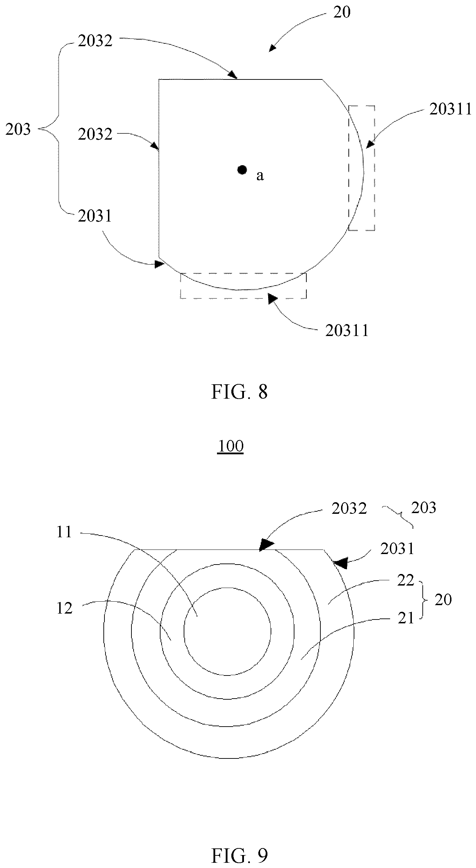

Each second lens 20 may have one or more connection surfaces 2032. Referring to FIG. 6, in an embodiment, the circumferential surface 203 of the second lens 20 includes one connection surface 2032 and one section of cylindrical surface 2031, and the connection surface 2032 is connected to the cylindrical surface 2031. Referring to FIG. 7 and FIG. 8, the circumferential surface 203 of the second lens 20 in each embodiment shown in the figure includes two connection surfaces 2032, and the two connection surfaces 2032 intersect vertically, or extension surfaces of the two connection surfaces 2032 intersect vertically. It may be understood that, in another embodiment of this application, two connection surfaces 2032 or extension surfaces of the two connection surfaces 2032 may intersect at another angle. Specifically, referring to FIG. 7, the circumferential surface 203 of the second lens 20 shown in the figure includes two connection surfaces 2032 and two sections of cylindrical surface 2031. The connection surfaces 2032 and the sections of cylindrical surface 2031 are alternately connected, that is, each of two opposite sides of each connection surface 2032 is connected to one section of cylindrical surface. In this case, extension surfaces of the two connection surfaces 2032 intersect. Referring to FIG. 8, the circumferential surface 203 of the second lens 20 shown in the figure includes two connection surfaces 2032 and one section of cylindrical surface 2031, each of two opposite ends of the section of cylindrical surface 2031 is connected to one connection surface 2032, and the two connection surfaces 2032 intersect. It may be understood that, in another embodiment of this application, when there are more than two connection surfaces 2032, a connection manner of any two adjacent connection surfaces 2032 of the plurality of connection surfaces 2032 is the same as a connection manner and a location relationship of the two connection surfaces 2032 in any one of the second lenses 20 in the embodiment shown in FIG. 6, FIG. 7, or FIG. 8. In other words, any two adjacent connection surfaces 2032 of the plurality of connection surfaces 2032 intersect or extension surfaces of the two connection surfaces intersect. When extension surfaces of any two adjacent connection surfaces 2032 intersect, the two adjacent connection surfaces 2032 are connected by using one section of cylindrical surface 2031.

There is one or more second lenses 20. When there is one second lens 20, a specific structure of a circumferential surface of the second lens 20 is shown in the foregoing embodiment. When there are two or more second lenses 20, the connection surfaces 2032 that are of the plurality of second lenses 20 and that are located on a same side of the optical axis a are coplanar, and the connection surfaces 2032 are all parallel to the optical axis a. In other words, the plurality of second lenses 20 are obtained by simultaneously cutting a plurality of rotationally symmetric lenses on a plane parallel to the optical axis a. The connection surfaces 2032 of the plurality of second lenses 20 are coplanar, so that when the second lens 20 is applied to the lens module 100, it can be ensured that the second lens 20 has an area as large as possible when a radial size on a side from the optical axis a to the connection surface 2032 in the lens module 100 is fixed. In this way, a better photographing effect is achieved when the lens module 100 is applied to the photographing module 200.

Referring to FIG. 9, in an embodiment of this application, there are two second lenses 20, which are a lens 21 and a lens 22, and a radius of the lens 22 is larger than a radius of the lens 21. The lens 21 and the lens 22 each have only one connection surface 2032, and the connection surfaces 2032 of the lens 21 and the lens 22 are coplanar.

In an implementation of this application, there are P second lenses. Each of M second lenses of the P second lenses has a plurality of connection surfaces including a first connection surface and a second connection surface. Each of N second lenses of the P second lenses has one connection surface, and the connection surface and the first connection surface are coplanar, where P = M + N, and P, M, and N are all positive integers.

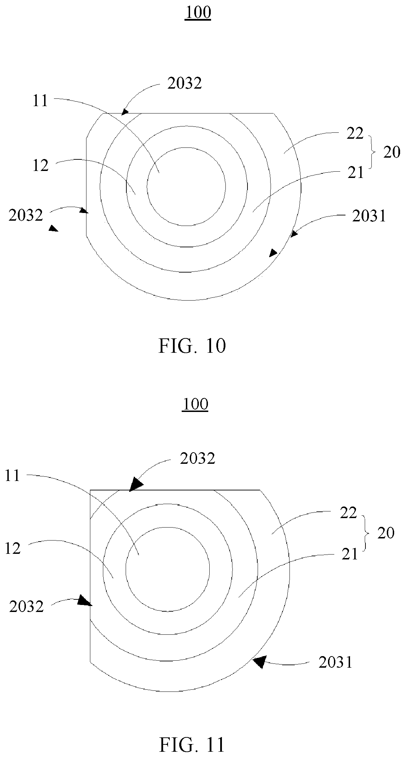

Referring to FIG. 10, in another embodiment of this application, there are two second lenses 20, which are a lens 21 and a lens 22, and a radius of the lens 22 is larger than a radius of the lens 21. The lens 21 has only one connection surface 2032, and the lens 22 is the second lens shown in FIG. 7 and has two connection surfaces 2032. The two connection surfaces 2032 are a first connection surface and a second connection surface, and the first connection surface is perpendicular to the second connection surface. The first connection surface of the lens 22 and the connection surface 2032 of the lens 21 are coplanar. When the radii of the two second lenses 20 in this embodiment are respectively the same as the radii of the two second lenses 20 in FIG. 9, the lens 22 in the embodiment in FIG. 9 has only one connection surface 2032, but the lens 22 in this embodiment has two connection surfaces 2032. Therefore, when the second lens 20 in this embodiment is applied to the lens module 100, a size in a direction in which the lens module 100 in this embodiment is perpendicular to the second connection surface of the lens 22 is less than a radial size of the lens 22 in the embodiment in FIG. 9.

Referring to FIG. 11, in another embodiment of this application, there are two second lenses 20, which are a lens 21 and a lens 22, and a radius of the lens 22 is larger than a radius of the lens 21. The lens 21 and the lens 22 each have two connection surfaces 2032, and the two connection surfaces 2032 are a first connection surface and a second connection surface. The lens 21 is the second lens in the embodiment shown in FIG. 7, and the lens 22 is the second lens in the embodiment shown in FIG. 8. The connection surfaces 2032 that are of the two second lenses 20 and that are located on a same side of the optical axis a are coplanar, to be specific, the first connection surface of the lens 21 and the first connection surface of the lens 22 are coplanar, and the second connection surface of the lens 21 and the second connection surface of the lens 22 are coplanar. When the radii of the two second lenses 20 in this embodiment are respectively the same as the radii of the two second lenses 20 in FIG. 10, because the lens 21 in the embodiment shown in FIG. 10 has only one connection surface 2032, but the lens 21 in this embodiment has two connection surfaces 2032, a radial size in a direction in which the lens 21 in this embodiment is perpendicular to one of the connection surfaces 2032 is smaller than that in the embodiment shown in FIG. 10.

Referring to FIG. 5 again, the lens module 100 in this embodiment specifically includes three first lenses 10 and one second lens 20. The three first lenses 10 are a lens 11, a lens 12, and a lens 13. The second lens in this embodiment is the second lens 20 shown in FIG. 6, and the second lens 20 has one connection surface. The lens 11, the lens 12, the lens 13, and the second lens 20 are sequentially arranged from the object side to the image side in ascending order of radial size. The lens 11 is a convex lens, has a convex image side surface and a convex object side surface, and has a light convergence function, to converge light beams from various fields of view. The lens 12 is a concave lens, has a concave object side surface and a planar image side surface, and has a light divergence function, to correct a color deviation generated by light of different wavelengths that enters the lens module. The lens 13 is an abnormal convex lens. Specifically, the lens 13 in this embodiment includes a central area that has relatively large positive focal power and that is centered on the optical axis a, and an edge area that has negative focal power and that surrounds the central area. The central area is used to correct a spherical deviation of a central field of view, and the edge area is used to increase a field of view of the lens 13 to achieve a good imaging effect.

The second lens 20 is an abnormal concave lens, and includes a central part and an edge part. The second lens 20 includes a central area that has negative focal power and that is centered on the optical axis a, and an edge area that has positive focal power and that surrounds the central area. The central area is smoothly connected to a surface of the edge area. The central area has a convex object side surface and a concave image side surface, and the edge area has a concave object side surface and a convex object side surface. The central area of the second lens 20 is used to increase a post-operating distance, and the edge area of the second lens 20 is used to converge a light beam with a large field of view of the lens module 100, to ensure imaging quality of the lens module 100. In this embodiment, the central area of the second lens 20 is a rotationally symmetric structure, and the edge area is an asymmetric structure. The connection surface 2032 formed in the cutting manners of the implementations shown in FIG. 5 to FIG. 11 is located in the edge area of the second lens 20. Similarly, the corresponding area 20311 of the cylindrical surface 2031 of the second lens 20 is also located in the edge area of the second lens 20. The corresponding area 20311 and the connection surface 2032 correspond to each other and are located on two opposite sides of the optical axis a. In a process of cutting the connection surface 2032, the connection surface 2032 may be within the edge area, provided that it is ensured that the vertical distance from the connection surface 2031 to the optical axis a is greater than the radius of the first lens 10. In other words, a range of the central area of the second lens 20 may be set with reference to a vertical projection of the first lens 10 on the second lens 20.

In an implementation, a distance from the optical axis of the second lens 20 to the connection surface 2032 may be truncated by 1.3 mm compared with a prior-art lens that is rotationally symmetric. Specifically, the lens module 100 in this embodiment may be used in visible light of 470 nm to 650 nm. A focal length of the lens module 100 is 3.3, an F value (a ratio of an objective focal length (EFL) to an incident pupil circumference (D)) is 2.2, a full FOV (field angle, field of view) is 80°, an HFOV (horizontal field of view, horizontal field of view) is 42° to -26°, and a VFOV (Vertical field of view, vertical field of view) is 27° to -27°. In addition, the lens module 100 in this embodiment has a good imaging effect. In this embodiment, aberrations such as a field area and a distortion of the lens module 100 are relatively small, so that the lens module 100 has a good imaging effect for visible light in each band. Specifically, specific parameters of an optical transfer function (Modulation Transfer Function, MTF) of the photographing module provided in this embodiment of this application are as follows: A field of view contrast of an axis point is 15%@500 lp/mm and 49%@2500 lp/mm, and a 70% field of view contrast is 10%@500 lp/mm and 36%@250 lp/mm. Therefore, it can be learned that the photographing module provided in this embodiment of this application meets an imaging resolution requirement. In addition, a full field of view distortion of the photographing module provided in this embodiment of this application is less than 2%, and meets an imaging distortion requirement.

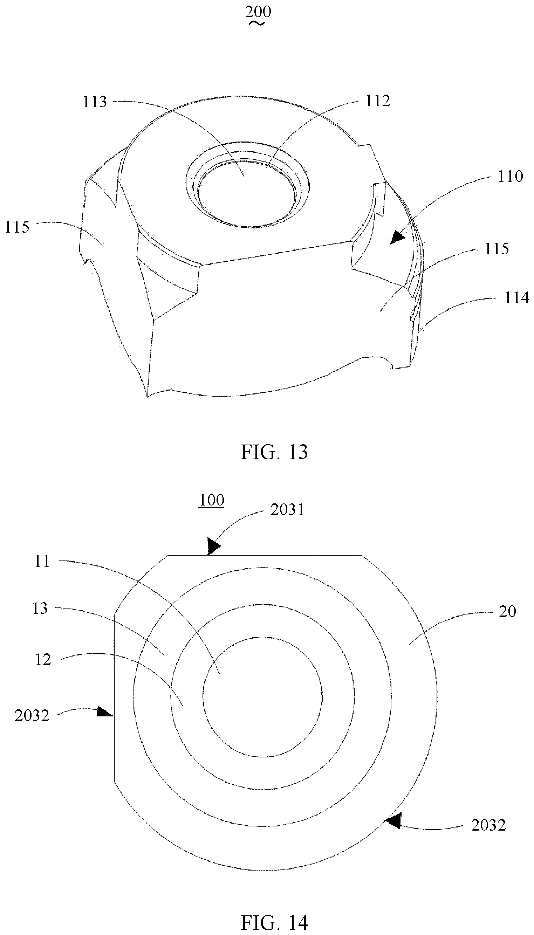

FIG. 13 is a three-dimensional schematic diagram of an outer surface of a photographing module 200 according to an embodiment of this application. Only an appearance surface of a lens tube 110, a light inlet hole 112, and a light inlet pupil 113 can be seen. FIG. 14 is a schematic planar diagram of a lens module 100 in the photographing module 200 provided in the specific embodiment shown in FIG. 13. A structure of the lens module 100 is basically the same as that of the lens module 100 in FIG. 5. A specific difference lies in that the second lens 20 in this embodiment is the second lens 20 shown in FIG. 8. To be specific, the second lens 20 includes two connection surfaces 2032, and the two connection surfaces 2032 intersect.

Referring to FIG. 3 and FIG. 4 again, in this embodiment of this application, the lens tube 110 of the photographing module 200 includes a tube wall, an accommodating cavity 111 is disposed inside the tube wall, and the lens module 100 is accommodated in the accommodating cavity 111. The light inlet hole 112 is disposed at one end of the tube wall, the light inlet hole 112 is connected to the accommodating cavity 111, and light outside the lens tube 110 is irradiated to the lens module 100 in the accommodating cavity 111 by using the light inlet hole 112. The first lens 10 is closer to the light inlet hole 112 than the second lens 20. The light inlet pupil 113 is installed in the light inlet hole 112, and the light inlet pupil 113 can seal the light inlet hole 112, to prevent an external impurity such as dust from entering the lens tube 110, thereby ensuring a use effect of the lens module 100. The light inlet pupil 113 may be a transparent plate or a lens. When the light inlet pupil 113 is a lens, external light can be converged by using the light inlet pupil 113, so that more light can enter the accommodating cavity 111 through the light inlet pupil 113, thereby achieving a better photographing effect.

The lens tube 110 includes a first segment 110a and a second segment 110b that are connected to each other. The first lens 10 of the lens module 100 is accommodated in an accommodating cavity of the first segment 110a, and the second lens 20 of the lens module 100 is accommodated in an accommodating cavity of the second segment 110b. A tube wall of the first segment 110a is a rotationally symmetric structure that uses an optical axis a of the first lens 10 as a rotation axis. In this embodiment, the first segment 11a is cylindrical. A tube wall of the second segment 110b includes one or more cylinder walls 114 and one or more planar walls 115 connected to the one or more cylinder walls 114, the cylindrical surface 2031 of the second lens 20 is correspondingly disposed on an inner side of the cylinder wall 114, and the connection surface 2032 of the second lens 20 is correspondingly disposed on an inner side of the planar wall 115, that is, a radial profile of the second end 110b is the same as a shape of the circumferential surface 203 (referring to FIG. 7) of the second lens 20 accommodated in the second segment 110b.

Because a radial size of the lens module 100 decreases, a radial size of the lens tube 110 accommodating the lens module 100 also decreases. Specifically, the cylindrical surface 2031 of the second lens 20 is correspondingly disposed on the inner side of the cylinder wall 114, and the connection surface 2032 of the second lens 20 is correspondingly disposed on the inner side of the planar wall 115. A vertical distance from the optical axis a to the connection surface 2032 of the second lens 20 is less than a radius of the cylindrical surface 2031 of the second lens 20, that is, a distance from the optical axis a to the planar wall 115 of the lens tube 110 can be less than a minimum distance from the optical axis a to the cylinder wall 114 of the lens tube 110. Therefore, compared with a prior-art case in which distances from the optical axis to all positions on the surface of the lens tube are the same, a size in a direction in which the lens tube 110 is perpendicular to the planar wall 115 is relatively small in this application.

In another embodiment of this application, the planar wall 115 of the second segment 110b is tangent to the tube wall of the first segment 110a, so that the radial size of the lens tube 110 is minimized. In this embodiment of this application, a radial size of the second lens 20 is larger than a radial size of the first lens 10. Therefore, when the connection surface 2032 of the second lens 20 in the lens module 100 is tangent to a circumferential surface of a first lens 10 with a largest radius, the radial size of the lens module 100 is minimized. In this embodiment, the connection surface 2032 of the second lens 20 is tangent to the circumferential surface of the first lens 10 with a largest radius, so that the planar wall 115 of the second segment 110b of the lens tube is tangent to the tube wall of the first segment 110a. In this way, a size from the optical axis a of the photographing module 200 to the planar wall 115 is minimized.

In this embodiment of this application, a radial profile of an outer surface of the lens tube 110 is the same as a circumferential profile of a lens in the accommodating cavity 111. Specifically, the first lens 10 is a rotationally symmetric lens that uses the optical axis as an axis, that is, a circumferential surface of the first lens 10 is a cylindrical surface using the optical axis as a central axis. Specifically, the circumferential surface of the first lens 10 may be a lateral surface of a cylinder or a lateral surface of a conical frustum. Therefore, the first segment 110a accommodating the first lens 10 is columnar. In this embodiment, the first segment 110a accommodates three first lenses 10, namely, a lens 11, a lens 12, and a lens 13. Radii of the lens 11, the lens 12, and the lens 13 are in ascending order, that is, the three first lenses 10 are arranged from the object side to the image side in a stepped manner. The first segment 110a includes three blocks 111a, and each block 111a accommodates one first lens 10. In addition, the three first lenses 10 are arranged from the object side to the image side in ascending order of radius, and in this embodiment, thicknesses of the lens tube 110 are approximately the same in all positions. Therefore, radii of the three blocks 111a gradually change from the object side to the image side, and a step-shaped structure is formed.

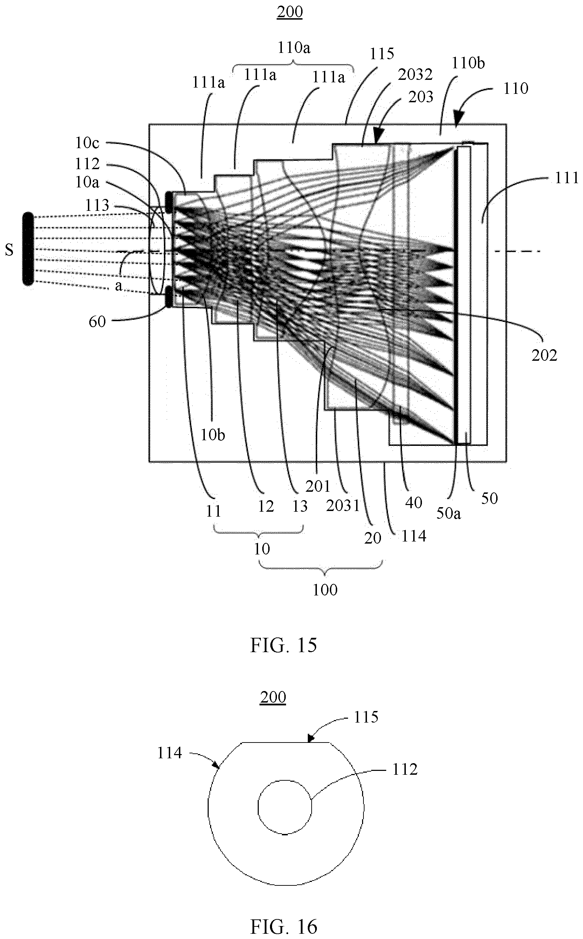

Referring to FIG. 13 and FIG. 14, in another embodiment of this application, the lens tube 110 accommodates the lens module 100 shown in FIG. 14. When the second lens 22 includes a plurality of connection surfaces, the second segment of the lens tube 110 of the photographing module 200 includes a plurality of planar walls 115, so that a size in a direction in which the photographing module 200 is perpendicular to the connection surface decreases, that is, sizes in a plurality of directions in which the photographing module 200 is perpendicular to the optical axis decreases. For example, when the lens module in the photographing module 200 is the lens module in FIG. 11, the second lens 22 includes a first connection surface 2032 and a second connection surface 2032 that intersect vertically, and the lens tube 110 includes two planes 115. Both a size in a direction in which the photographing module 200 is perpendicular to the first connection surface 2032 and a size in a direction in which the photographing module 200 is perpendicular to the second connection surface 2032 decrease. Referring to FIG. 15 and FIG. 16, in another embodiment of this application, the outer surface of the lens tube 110 is not step-shaped, that is, wall thicknesses of blocks of the first segment 110a and the second segment 110b of the lens tube 110 are different, so that a radius of the outer surface of the lens tube 110 remains unchanged, and the entire radius of the lens tube 110 remains unchanged. In this embodiment, the radius of the outer surface of the lens tube 110 is set to remaining unchanged, so that the lens tube 110 has a simple structure and is easy to make.

In a specific embodiment, as shown in FIG. 4, the photographing module 200 in this embodiment of this application further includes a sensing chip 50. The sensing chip 50 is accommodated in the lens tube 110 and is located on an image side of the lens module 100, so that an object photographed by the lens module 100 is imaged on the sensing chip 50. The sensing chip 50 senses incident light entering the lens module 100 to perform imaging, and the sensing chip converts an optical signal of the incident light of the object into an electrical signal, to store imaging of the object and the like. In this application, the connection surface 2032 of the second lens 20 of the lens module 100 is aligned with an edge of the sensing chip 50, or an edge of the sensing chip 50 slightly protrudes from the connection surface 2032 of the second lens 20, to prevent the sensing chip 50 from protruding excessively from an edge of the second lens 20, thereby preventing the lens module 100 from being relatively wide because the sensing chip 50 is excessively wide. In addition, it is ensured that all light refracted by the lens module 100 can be used for imaging on the sensing chip 50, to increase a field of view of the lens module 100 as much as possible. In this embodiment of this application, the edge of the sensing chip 50 does not need to be cut to ensure that the sensing chip 50 has a normal function. In this embodiment of this application, the sensing chip 50 is a square piece, and a distance from a geometric center to the edge of the sensing chip 50 is slightly greater than or equal to a radius of the cylindrical surface 22 of the second lens 20. In the prior art, the second lens is a rotationally symmetric lens, and a geometric center of the sensing chip 50 and an optical axis a of the second lens are collinear. However, in this application, the connection surface 2032 is obtained by cutting off a part of the edge of the second lens 20. In this case, a vertical distance from the optical axis a to the connection surface 2032 is far less than a distance from the geometric center of the sensing chip to the edge of the sensing chip. Therefore, the connection surface 2032 of the second lens 20 is aligned or nearly aligned with the edge of the sensing chip 50, and the geometric center of the sensing chip 50 deviates from the optical axis a.

In an embodiment, the photographing module 200 may further include a light filter 40, and the light filter 40 is located between the second lens 20 and the sensing chip 50. A material of the light filter 40 may be various transparent materials such as glass or plastic. The light filter 40 filters out one or more types of light that are in incident light and that damage the sensing chip 50, to prolong a service life of the sensing chip 50. In this embodiment, the light filter 40 is an infrared (IR, Infrared Radiation) light filter 40. The light filter 40 can filter out infrared light that greatly damages an imaging effect of the sensing chip 50. In this embodiment, the light filter is circular, and an area of the light filter 40 is greater than an area of the second lens 20, so that all light emitted from the lens module 100 into the photographing module 200 is irradiated to the sensing chip 50 through the light filter 40.

In an embodiment, the photographing module 200 may further include a light stopper 60, and the light stopper 60 may be fastened to a side wall of the accommodating cavity 111 and is located between the first lens 10 and the light inlet hole 112. By adjusting the light stopper 60, an area that the light stopper 60 blocks the light inlet hole is adjusted, to increase, based on an actual requirement, an amount of light entering the photographing module 100. It may be understood that the light stopper 60 may alternatively be located on an outer side of the lens tube, that is, located on a side that is of the light inlet hole 112 and that is away from the first lens 10.

Referring to FIG. 1 and FIG. 2 again, in an embodiment of the terminal device 1000 provided in this application, the planar wall 115 of the second segment 110b of the lens tube 110 is closer to the side frame 400 than the cylinder wall 114. The non-display area S2 blocks the block 111a in which the first lens 10 close to the light inlet hole 112 is located, to avoid exposure of an internal structure of the photographing module, and ensure an appearance effect of the terminal device.

Referring to FIG. 1, FIG. 2, and FIG. 3, in another embodiment of this application, a photographing module 200 of the terminal device 1000 is the photographing module in the embodiment in FIG. 3. A vertical distance from the optical axis a of the lens module to the upper edge 340 of the non-display area S2 is slightly greater than or equal to a vertical distance from the optical axis a to the planar wall 115 of the second segment of the lens tube 110, and a vertical distance from the optical axis a of the lens module to the lower edge 350 of the non-display area S2 is slightly greater than or equal to a radius of the block 111a in which the first lens 10 close to the hole 112 is located. To be specific, when a width of the non-display area S2 (that is, a distance from the side frame 400 to the display area S1) is minimized, the upper edge 340 of the non-display area S2 is aligned with the planar wall 115 of the second segment of the lens tube 110, and the lower edge 350 of the non-display area S2 is tangent to a circumferential surface of the block 111a in which the first lens 10 close to the hole 112 is located. Because a distance from the optical axis a of the photographing module 200 to the planar wall 115 is less than a distance from the optical axis a to the cambered wall 114, compared with a prior-art case in which distances from the optical axis to all positions of the second end 110b are the same, a distance from the optical axis a to the upper edge 340 of the non-display area S2 is shorter. Therefore, the width of the non-display area S2 decreases, that is, an area of the non-display area S2 decreases. In this way, a proportion of a display area of the terminal device 100 increases, to help implement full-screen display of the terminal device.

Referring to FIG. 1, FIG. 2, and FIG. 13, in another embodiment of this application, a photographing module 200 of the terminal device 1000 is the photographing module shown in FIG. 13. Sizes in two directions in which the photographing module 200 is perpendicular to the optical axis a decrease, the upper edge 340 of the non-display area S2 is basically aligned with one planar wall 115 of the photographing module 200, the side edge 360 adjacent to the upper edge 340 is basically aligned with the other planar wall 115, so that a width of the non-display area S2 decreases, and a size in a direction of a length perpendicular to the width also decreases. In this way, an area of the non-display area S2 further decreases, and a proportion of the display area S1 increases.

The foregoing descriptions are preferred implementations of this application. It should be noted that a person of ordinary skill in the art may make several improvements or polishing without departing from the scope of the appended claims.

## Claims

1. A photographing module (200), comprising a lens module (100) and a sensing chip (50); wherein the lens module (100) comprises one or more first lenses (10, 11, 12, 13) arranged along an optical axis (a) of the lens module, and one or more second lenses (20, 21, 22) arranged along the optical axis, wherein the first lens (10, 11, 12, 13) is located between a to-be-imaged object and the second lens (20, 21, 22), and a radial size of the second lens (20, 21, 22) is larger than a radial size of the first lens (10, 11, 12, 13); an outer surface of the second lens (20, 21, 22) comprises a light inlet surface (201), a light outlet surface (202), and a circumferential surface (203) for connecting the light inlet surface (201) and the light outlet surface (202), the circumferential surface (203) of the second lens (20, 21, 22) comprises one or more sections of cylindrical surface (2031) and one or more connection surfaces (2032), and the connection surface (2032) is connected to the cylindrical surface (2031); the connection surface (2032) is a plane, the one or more sections of cylindrical surface (2031) are formed when an angle by which a straight line rotates around the optical axis (a) at a fixed distance is less than 360 degrees, and the straight line is parallel to the optical axis (a) or an angle between the straight line and the optical axis (a) is an acute angle, and the one or more connection surfaces (2032) are parallel to the optical axis; a vertical distance from the optical axis to any one of the connection surfaces (2031) is less than a minimum distance from the optical axis to the cylindrical surface (2031) and is greater than or equal to a radius of the first lens (10, 11, 12, 13); and the cylindrical surface (2031) comprises one or more corresponding areas (20311), the corresponding areas (20311) are in a one-to-one correspondence with the connection surfaces (2032), and one corresponding area (20311) and one corresponding connection surface (2031) are located on two opposite sides of the optical axis; the sensing chip (50) is located on an image side of the lens module (100), so that an object photographed by the lens module (100) imaged on the sensing chip (50); **characterized in that** the geometric center of the sensing chip (50) is offset from the optical axis in the direction from the optical axis towards the corresponding area (20311).

2. The photographing module according to claim 1, wherein there are a plurality of second lenses, each of the plurality of second lenses has one connection surface, and the plurality of connection surfaces of the plurality of second lenses are coplanar.

3. The photographing module according to claim 1, wherein there are a plurality of second lenses, each of the plurality of second lenses has a plurality of connection surfaces, and the plurality of connection surfaces of each second lens intersect, or extension surfaces of the plurality of connection surfaces of each second lens intersect.

4. The photographing module according to claim 3, wherein the plurality of connection surfaces of each second lens intersect vertically, or the extension surfaces of the plurality of connection surfaces of each second lens intersect vertically.

5. The photographing module according to claim 3 or 4, wherein in the plurality of second lenses, the connection surfaces located on a same side of the optical axis are coplanar.

6. The photographing module according to claim 1, wherein there are P second lenses; each of M second lenses of the P second lenses has a plurality of connection surfaces comprising a first connection surface and a second connection surface; and each of N second lenses of the P second lenses has one connection surface, and the connection surface and the first connection surface are coplanar, wherein P = M + N, and P, M, and N are all positive integers.

7. The photographing module according to any one of claims 1 to 6, wherein the first lens comprises a light inlet surface, a light outlet surface, and a circumferential surface of the first lens for connecting the light inlet surface of the first lens and the light outlet surface of the first lens, the circumferential surface of the first lens is a lateral surface of a cylinder or a lateral surface of a conical frustum, an axis of the lateral surface of the cylinder is the optical axis, and the one or more connection surfaces of the one or more second lenses are tangent to the circumferential surface of the first lens.

8. The photographing module according to any one of claims 1 to 7, wherein the photographing module comprises a lens tube, wherein the lens tube comprises a first segment and a second segment that are connected to each other, the first lens is accommodated in the first segment, and the second lens is accommodated in the second segment; a tube wall of the first segment is a rotationally symmetric structure that uses an optical axis of the first lens as a rotation axis; and a tube wall of the second segment comprises one or more sections of cylinder wall and one or more planar walls connected to the one or more sections of cylinder wall, the cylindrical surface of the second lens is correspondingly disposed on an inner side of the cylinder wall, and the connection surface of the second lens is correspondingly disposed on an inner side of the planar wall.

9. The photographing module according to claim 8, wherein the first segment of the lens tube is cylindrical, and a plane in which the one or more planar walls of the second segment are located is tangent to the tube wall of the first segment.

10. The photographing module according to claim 8, wherein there are at least two first lenses, and the first segment of the lens tube is of a step-shaped structure; and the first segment comprises at least two blocks, each block is cylindrical, each first lens is accommodated in one block, and radial sizes of the blocks are in ascending order in a direction from the first segment to the second segment of the lens tube.

11. A terminal device, wherein the terminal device comprises a display panel, a side frame, a rear housing, and the photographing module according to any one of claims 8 to 10; the display panel and the rear housing are fastened to two sides of the side frame, and the display panel comprises a display area and a non-display area located on an edge of the display area; and the photographing module is assembled on an inner side of the non-display area, and a side of a planar wall of a lens tube of the photographing module faces the side frame.

## Patentansprüche

1. Bildaufnahmemodul (200), umfassend ein Linsenmodul (100) und einen Erfassungschip (50);
wobei das Linsenmodul (100) eine oder mehrere erste Linsen (10, 11, 12, 13), die entlang einer optischen Achse (a) des Linsenmoduls angeordnet sind, und eine oder mehrere zweite Linsen (20, 21, 22), die entlang der optischen Achse angeordnet sind, umfasst, wobei die erste Linse (10, 11, 12, 13) sich zwischen einem Objekt, das abgebildet werden soll, und der zweiten Linse (20, 21, 22) befindet und eine radiale Größe der zweiten Linse (20, 21, 22) größer als eine radiale Größe der ersten Linse (10, 11, 12, 13) ist;
eine äußere Oberfläche der zweiten Linse (20, 21, 22) eine Lichteinlassoberfläche (201), eine Lichtauslassoberfläche (202) und eine Umfangsoberfläche (203) zum Verbinden der Lichteinlassoberfläche (201) und der Lichtauslassoberfläche (202) umfasst, die Umfangsoberfläche (203) der zweiten Linse (20, 21, 22) einen oder mehrere zylindrische Oberflächenabschnitte (2031) und eine oder mehrere Verbindungsoberflächen (2032) umfasst und die Verbindungsoberfläche (2032) mit der zylindrischen Oberfläche (2031) verbunden ist;
die Verbindungsoberfläche (2032) eine Ebene ist, der eine oder die mehreren zylindrischen Oberflächenabschnitte (2031) gebildet werden, wenn ein Winkel, um den eine Gerade um die optische Achse (a) bei einer festen Distanz rotiert, kleiner als 360 Grad ist, und die Gerade zu der optischen Achse (a) parallel ist oder ein Winkel zwischen der Geraden und der optischen Achse (a) ein spitzer Winkel ist und die eine oder mehreren Verbindungsoberflächen (2032) zu der optischen Achse parallel sind, eine vertikale Distanz von der optischen Achse zu einer der Verbindungsoberflächen (2031) kleiner als eine minimale Distanz von der optischen Achse zu der zylindrischen Oberfläche (2031) ist und größer als ein oder gleich einem Radius der ersten Linse (10, 11, 12, 13) ist;
und die zylindrische Oberfläche (2031) einen oder mehrere korrespondierende Bereiche (20311) umfasst, die korrespondierenden Bereiche (20311) in einer Eins-zuein-Korrespondenz mit den Verbindungsoberflächen (2032) stehen und ein korrespondierender Bereich (20311) und eine korrespondierende Verbindungsoberfläche (2031) sich auf zwei gegenüberliegenden Seiten der optischen Achse befinden,
der Erfassungschip (50) sich auf einer Bildseite des Linsenmoduls (100) befindet, so dass ein durch das Linsenmodul (100) fotografiertes Objekt auf dem Erfassungschip (50) abgebildet wird;
**dadurch gekennzeichnet, dass** die geometrische Mitte des Erfassungschips (50) von der optischen Achse in der Richtung von der optischen Achse hin zu dem korrespondierenden Bereich (20311) versetzt ist.

2. Bildaufnahmemodul nach Anspruch 1, wobei eine Vielzahl von zweiten Linsen vorhanden ist, jede der Vielzahl von zweiten Linsen eine Verbindungsoberfläche aufweist und die Vielzahl von Verbindungsoberflächen der Vielzahl von zweiten Linsen koplanar ist.

3. Bildaufnahmemodul nach Anspruch 1, wobei eine Vielzahl von zweiten Linsen vorhanden ist, jede der Vielzahl von zweiten Linsen eine Vielzahl von Verbindungsoberflächen aufweist und die Vielzahl von Verbindungsoberflächen jeder zweiten Linse schneidet oder Erweiterungsoberflächen der Vielzahl von Verbindungsoberflächen jeder zweiten Linse schneiden.

4. Bildaufnahmemodul nach Anspruch 3, wobei die Vielzahl von Verbindungsoberflächen jeder zweiten Linse vertikal schneidet oder die Erweiterungsoberflächen der Vielzahl von Verbindungsoberflächen jeder zweiten Linse vertikal schneiden.

5. Bildaufnahmemodul nach Anspruch 3 oder 4, wobei in der Vielzahl von zweiten Linsen die Verbindungsoberflächen, die sich auf einer selben Seite der optischen Achse befinden, koplanar sind.

6. Bildaufnahmemodul nach Anspruch 1, wobei P zweite Linsen vorhanden sind, jede von M zweiten Linsen der P zweiten Linsen eine Vielzahl von Verbindungsoberflächen, umfassend eine erste Verbindungsoberfläche und eine zweite Verbindungsoberfläche, aufweist; und jede von N zweiten Linsen der P zweiten Linsen eine Verbindungsoberfläche aufweist und die Verbindungsoberfläche und die erste Verbindungsoberfläche koplanar sind, mit P = M + N, und wobei P, M und N alle positive ganze Zahlen sind.

7. Bildaufnahmemodul nach einem der Ansprüche 1 bis 6, wobei die erste Linse eine Lichteinlassoberfläche, eine Lichtauslassoberfläche und eine Umfangsoberfläche der ersten Linse zum Verbinden der Lichteinlassoberfläche der ersten Linse und der Lichtauslassoberfläche der ersten Linse umfasst, die Umfangsoberfläche der ersten Linse eine laterale Oberfläche eines Zylinder oder eine laterale Oberfläche eines Kegelstumpfes ist, eine Achse der lateralen Oberfläche des Zylinders die optische Achse ist und die eine oder mehreren Verbindungsoberflächen der einen oder mehreren zweiten Linsen zu der Umfangsoberfläche der ersten Linse tangential sind.

8. Bildaufnahmemodul nach einem der Ansprüche 1 bis 7, wobei das Bildaufnahmemodul ein Linsenrohr umfasst, wobei das Linsenrohr ein erstes Segment und ein zweites Segment umfasst, die miteinander verbunden sind, die erste Linse in dem ersten Segment untergebracht ist und die zweite Linse in dem zweiten Segment untergebracht ist; eine Rohrwand des ersten Segments eine rotationssymmetrische Struktur ist, die eine optische Achse der ersten Linse als eine Rotationsachse verwendet; und eine Rohrwand des zweiten Segments einen oder mehrere Zylinderwandabschnitte und eine oder mehrere planare Wände, die mit dem einen oder den mehreren Zylinderwandabschnitten verbunden sind, umfasst, die zylindrische Oberfläche der zweiten Linse korrespondierend an einer Innenseite der Zylinderwand angeordnet ist und die Verbindungsoberfläche der zweiten Linse korrespondierend an einer Innenseite der planaren Wand angeordnet ist.

9. Bildaufnahmemodul nach Anspruch 8, wobei das erste Segment des Linsenrohrs zylindrisch ist und eine Ebene, in der sich die eine oder mehreren planaren Wände des zweiten Segments befinden, zu der Rohrwand des ersten Segments tangential ist.

10. Bildaufnahmemodul nach Anspruch 8, wobei mindestens zwei erste Linsen vorhanden sind und das erste Segment des Linsenrohrs eine stufenförmige Struktur aufweist; und das erste Segment mindestens zwei Blöcke umfasst, jeder Block zylindrisch ist, jede erste Linse in einem Block untergebracht ist und radiale Größen der Blöcke in einer Richtung von dem ersten Segment zu dem zweiten Segment des Linsenrohrs in aufsteigender Reihenfolge sind.

11. Endgerätvorrichtung, wobei die Endgerätvorrichtung eine Anzeigetafel, einen Seitenrahmen, ein hinteres Gehäuse und das Bildaufnahmemodul nach einem der Ansprüche 8 bis 10 umfasst, die Anzeigetafel und das hintere Gehäuse an zwei Seiten des Seitenrahmens befestigt sind und die Anzeigetafel eine Anzeigefläche und eine an einem Rand der Anzeigefläche angeordnete Nichtanzeigefläche umfasst, und das Bildaufnahmemodul an einer Innenseite der Nichtanzeigefläche montiert ist und eine Seite einer planaren Wand eines Linsenrohrs des Bildaufnahmemoduls zu dem Seitenrahmen weist.

## Revendications

1. Module photographique (200), comprenant un module (100) de lentilles et une puce capteur (50) ;
le module (100) de lentilles comprenant une ou plusieurs premières lentilles (10, 11, 12, 13) agencées suivant un axe optique (a) du module de lentilles, et une ou plusieurs deuxièmes lentilles (20, 21, 22) agencées suivant l'axe optique, la première lentille (10, 11, 12, 13) étant située entre un objet à imager et la deuxième lentille (20, 21, 22), et une dimension radiale de la deuxième lentille (20, 21, 22) étant supérieure à une dimension radiale de la première lentille (10, 11, 12, 13) ;
une surface extérieure de la deuxième lentille (20, 21, 22) comprenant une surface d'entrée de lumière (201), une surface de sortie de lumière (202) et une surface circonférentielle (203) pour relier la surface d'entrée de lumière (201) et la surface de sortie de lumière (202), la surface circonférentielle (203) de la deuxième lentille (20, 21, 22) comprenant une ou plusieurs sections de surface cylindrique (2031) et une ou plusieurs surfaces de liaison (2032), et la surface de liaison (2032) étant reliée à la surface cylindrique (2031) ; la surface de liaison (2032) étant un plan, les une ou plusieurs sections de surface cylindrique (2031) étant formées lorsqu'un angle de rotation d'une ligne droite autour de l'axe optique (a) à une distance fixe est inférieur à 360 degrés, et la ligne droite étant parallèle à l'axe optique (a) ou un angle entre la ligne droite et l'axe optique (a) étant un angle aigu, et les une ou plusieurs surfaces de liaison (2032) étant parallèles à l'axe optique ; une distance verticale de l'axe optique à l'une quelconque des surfaces de liaison (2031) étant inférieure à une distance minimale de l'axe optique à la surface cylindrique (2031) et étant supérieure ou égale à un rayon de la première lentille (10, 11, 12, 13) ; et la surface cylindrique (2031) comprenant une ou plusieurs zones correspondantes (20311), les zones correspondantes (20311) étant en correspondance biunivoque avec les surfaces de liaison (2032), et une zone correspondante (20311) et une surface de liaison correspondante (2031) étant situées de deux côtés opposés de l'axe optique ;
la puce capteur (50) étant située d'un côté image du module (100) de lentilles, de telle manière qu'un objet photographié par le module (100) de lentilles soit imagé sur la puce capteur (50) ;
**caractérisé en ce que** le centre géométrique de la puce capteur (50) est décalé par rapport à l'axe optique dans la direction allant de l'axe optique vers la zone correspondante (20311).

2. Module photographique selon la revendication 1, une pluralité de deuxièmes lentilles étant prévues, chacune de la pluralité de deuxièmes lentilles étant pourvue d'une surface de liaison, et la pluralité de surfaces de liaison de la pluralité de deuxièmes lentilles étant coplanaires.

3. Module photographique selon la revendication 1, une pluralité de deuxièmes lentilles étant prévues, chacune de la pluralité de deuxièmes lentilles étant pourvue d'une pluralité de surfaces de liaison, et la pluralité de surfaces de liaison de chaque deuxième lentille se coupant, ou des surfaces en prolongement de la pluralité de surfaces de liaison de chaque deuxième lentille se coupant.

4. Module photographique selon la revendication 3, la pluralité de surfaces de liaison de chaque deuxième lentille se coupant verticalement, ou les surfaces en prolongement de la pluralité de surfaces de liaison de chaque deuxième lentille se coupant verticalement.

5. Module photographique selon la revendication 3 ou 4, dans la pluralité de deuxièmes lentilles, les surfaces de liaison situées d'un même côté de l'axe optique étant coplanaires.

6. Module photographique selon la revendication 1, P deuxièmes lentilles étant prévues ; chacune de M deuxièmes lentilles parmi les P deuxièmes lentilles étant pourvue d'une pluralité de surfaces de liaison comprenant une première surface de liaison et une deuxième surface de liaison ; et chacune de N deuxièmes lentilles parmi les P deuxièmes lentilles étant pourvue d'une surface de liaison, et la surface de liaison et la première surface de liaison étant coplanaires, P = M + N, et P, M et N étant tous des entiers positifs.

7. Module photographique selon l'une quelconque des revendications 1 à 6, la première lentille comprenant une surface d'entrée de lumière, une surface de sortie de lumière et une surface circonférentielle de la première lentille pour relier la surface d'entrée de lumière de la première lentille et la surface de sortie de lumière de la première lentille, la surface circonférentielle de la première lentille étant une surface latérale d'un cylindre ou une surface latérale d'un tronc de cône, un axe de la surface latérale du cylindre étant l'axe optique, et les une ou plusieurs surfaces de liaison des une ou plusieurs deuxièmes lentilles étant tangentes à la surface circonférentielle de la première lentille.

8. Module photographique selon l'une quelconque des revendications 1 à 7, le module photographique comprenant un tube à lentilles, le tube à lentilles comprenant un premier segment et un deuxième segment qui sont reliés entre eux, la première lentille se logeant dans le premier segment et la deuxième lentille se logeant dans le deuxième segment ; une paroi de tube du premier segment étant une structure à symétrie de rotation qui utilise, comme axe de rotation, un axe optique de la première lentille ; et une paroi de tube du deuxième segment comprenant une ou plusieurs sections de paroi de cylindre et une ou plusieurs parois planes reliées aux une ou plusieurs sections de paroi de cylindre, la surface cylindrique de la deuxième lentille étant disposée de manière correspondante d'un côté intérieur de la paroi de cylindre, et la surface de liaison de la deuxième lentille étant disposée de manière correspondante d'un côté intérieur de la paroi plane.

9. Module photographique selon la revendication 8, le premier segment du tube à lentilles étant cylindrique, et un plan dans lequel sont situées les une ou plusieurs parois planes du deuxième segment étant tangent à la paroi de tube du premier segment.

10. Module photographique selon la revendication 8, au moins deux premières lentilles étant prévues, et le premier segment du tube à lentilles présentant une structure en gradins ; et le premier segment comprenant au moins deux blocs, chaque bloc étant cylindrique, chaque première lentille se logeant dans un bloc, et des dimensions radiales des blocs augmentant progressivement dans une direction allant du premier segment au deuxième segment du tube à lentilles.

11. Dispositif terminal, le dispositif terminal comprenant un panneau d'affichage, un cadre latéral, un boîtier arrière et le module photographique selon l'une quelconque des revendications 8 à 10 ; le panneau d'affichage et le boîtier arrière étant fixés sur deux côtés du cadre latéral, et le panneau d'affichage comprenant une zone d'affichage et une zone non d'affichage située sur un bord de la zone d'affichage ; et le module photographique étant assemblé d'un côté intérieur de la zone non d'affichage, et un côté d'une paroi plane d'un tube à lentilles du module photographique faisant face au cadre latéral.
